# EUROPEAN PATENT SPECIFICATION

(11) **EP 1 500 243 B1**
(45) Date of publication and mention of the grant of the patent: **18.07.2007**
(21) Application number: 02738448.6
(22) Date of filing: 29.04.2002
(51) Int. Cl.: H04L 29/06

(54) **INTERNET PROTOCOL BASED SYSTEM**
SYSTEM AUF DER BASIS DES INTERNET-PROTOKOLLS
SYSTEME FONDE SUR UN PROTOCOLE INTERNET

(43) Date of publication of application: 26.01.2005
(73) Proprietor: Nokia Corporation, 03260 Espoo (FI)
(72) Inventor: VESTERINEN, Seppo, FIN-90460 Oulumsalo (FI)
(74) Representative: Style, Kelda Camilla Karen
(86) International application number: PCT/IB2002/002324
(87) International publication number: WO 2003/094477

(56) References cited:
- EP-A- 1 089 575
- WO-A-01/91399
- R. STEWART ET AL: "Stream Control Transmission Protocol" NETWORK WORKING GROUP, REQUEST FOR COMMENTS: 2960, [Online] October 2000 (2000-10), pages 1-118, XP002227610 Retrieved from the Internet: <URL:http://www.ietf.org/rfc/rfc2960.txt > [retrieved on 2003-01-17]
- A. JUNGMAIER: "TLS over SCTP" NETWORK WORKING GROUP, INTERNET DRAFT, [Online] 14 November 2001 (2001-11-14), XP002227611 Retrieved from the Internet: <URL:http://community.roxen.com/developers /idocs/drafts/draft-ietf-tsvwg-tls-over-sc tp-00.txt> [retrieved on 2003-01-17]

## Description

### Field of the Invention

The present invention relates to an internet protocol based system and in particular but not exclusively to an internet protocol based system in accordance with a so-called third generation wireless communications standard.

### Background to the Invention

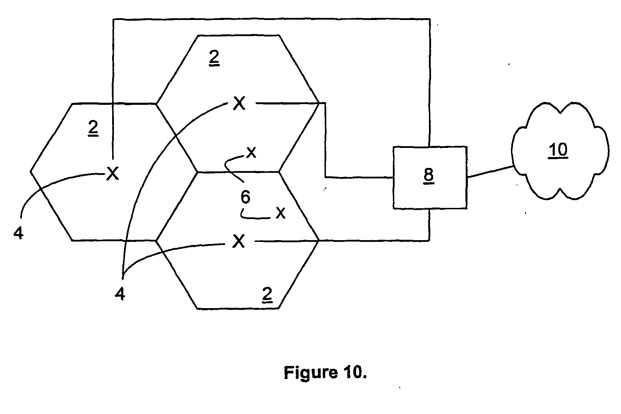

Wireless cellular communication networks are known and a schematic example of a network is shown in Figure 10. In these networks, the area covered is divided into a number of cells 2. Each cell 2 has associated with it a base transceiver station 4. The base transceiver stations 4 are arranged to communicate with mobile stations 6 located in the cells associated with the base transceiver stations. In addition to the base stations there is usually an entity 8 controlling the radio access network and base stations. This entity 8 is connected to the base stations and to the core network 10. In the so called third generation systems, this entity is called radio network controller (RNC) and in the GSM (global system for mobile communications) standard it is called base station controller (BSC). In the so called third generation system, sometimes referred to as the UMTS (universal mobile telecommunication system), the UMTS terrestrial radio access network UTRAN is connected from RNC to the core network via an lu interface.

As indicated above, there are a number of different standards known which govern the communication between mobile stations and the base stations as well as with other network elements (not shown). One example of a currently known standard is the GSM standard (global system for mobile communications). At the present time, work is being carried out on so-called third generation standards. In general, these third generation standards use code division multiple access in the radio interface between mobile stations 6 and base transceiver stations 4.

Currently it is proposed in the third generation standards to use the internet protocol IP in the radio access network (RAN). In this document, we refer to this as an IP based radio access network IP RAN. IP RAN can be connected to a third generation core network 10 by standard lu interface. In IP RAN networks, there is a need for interworking between the SS7 (signalling system no. 7) and IP domains to allow the delivery of signalling connection control point (SCCP) user messages such as radio access network application part (RANAP) signalling as well as new third generation network protocol messages over IP between two signalling end points. RANAP is radio access network signalling protocol that consists of mechanisms which handle all the procedures between the core network and radio access network.

A layer structure has been proposed. This layer structure uses the stream control transmission protocol (SCTP) which is a protocol standardized by IETF (Internet Engineering Task Force) and presented in RFC 2960. The SCTP protocol runs directly on top of an IP layer and is designed to transport PSTN (Public Switched Telephone Network) signalling messages but is capable of broader applications and can be used in IP RAN networks as a common protocol. The current third generation partnership project (3GPP) proposals suggest an adaptation layer between the stream control transmission protocol SCTP layer and the RANAP layer. This adaptation layer is referred to as the SS7 SCCP-user adaptation layer (SUA) or the SCCP/M3UA and has been proposed to transport RANAP and other third generation application protocol messages between two end points contained wholly within an IP network. Where the two end points are wholly contained in an IP network, this is said to be a peer to peer IP mode. In this mode, addressing within an IP domain can be based on IP addresses instead of the addressing mechanism presented in the SCCP layer.

One problem with the proposed layer structure is that there are too many layers. As the number of layers increases, the complexity increases and the performance is decreased.

One suggestion for solving the problem that has been proposed in the IP RAN context is to use a dedicated SCTP stream per user within one SCTP association, that is one peer to peer connection. In theory, one SCTP association could contain up to 64,000 streams. However, in practice the maximum number of streams cannot be utilised because each SCTP stream requires an instance at the SCTP layer that has to maintain the per stream receive/transmit buffer for messages and a state machine that takes care of the message delivery with error handling, that is retransmission, in each stream separately. Using an SCTP stream per user would consume too much processing power in a peer and so it is not a feasible solution.

R Stewart et al: "Stream control transmission protocol" network working group, request for comments: 2960, describes the SCTP system. SCTP provides for the transfer to user messages between peer SCTP users. This is performed within the context of an association between SCTP end points. The document describes the SCTP system as viewed as a layer between the SCTP user application and a connection as packet network service such as IP.

EP 1,089,575 describes a system and method for transporting IN/IAN signalling (SS7 signalling) over an IP based network using SCTP. The aforementioned adaptation layer is provided above the SCTP layer, this enables accurate addressing of the SCTP signal, and has the associated problems described above.

### Summary of the Invention

It is an aim of embodiments of the present invention to address the problem described above.

According to a first aspect of the present invention, there is provided an internet protocol based system comprising a plurality of entities, at least two of said entities being arranged to use SCTP for signalling therebetween, said SCTP signalling comprising a source port number, a destination port number, and data; characterized by: said SCTP signalling comprising connection identity information relating to a connection between at least two of said entities, said connection identity information identifying the ultimate destination of said data.

The entity may be any of the following: base station, controller, radio network controller, core network, radio network access server, gateway, server, mobile node, router, wireless router, computer, PC, SGSN, GGSN, any suitable radio access network element or the like.

According to a second aspect of the present invention, there is provided a method for use in an internet protocol based system comprising a plurality of entities, comprising the steps of: sending SCTP transport signalling information between two of said entities, said SCTP signalling information comprising a source port number, a destination port number, and data; characterized by: said SCTP signalling information comprising connection identity information relating to a connection between at least two of said entities, said connection identity information identifying the ultimate destination of said data.

According to a further aspect of the present invention, there is provided an apparatus for use in a internet protocol based system, said apparatus comprising means for sending to another entity an SCTP transport packet, said apparatus being arranged to include in said packet a source port number, a destination port number, and data; characterized by: said apparatus being arranged to include in said packet connection identity information relating to a connection between said apparatus and at least one further entity, said connection identity information identifying the ultimate destination of said data.

### Brief Description of Drawings

For a better understanding of the present invention and as to how the same may be carried into effect, reference will now be made by way of example to the accompanying drawings in which:
Figure 1 shows an arrangement including an IP RAN logical architecture used in embodiments of the present invention;
Figure 2 shows an example of a known control plane protocol stack currently proposed;
Figure 3 shows an control plane protocol stacks in an all IP RAN architecture, embodying the present invention;
Figure 4a shows the SCTP payload data (data chunk) format;
Figure 4b shows the SCTP header format;
Figure 5 illustrates the addressing elements in the IP packet that carries the SCTP payload data;
Figure 6 shows the non-access stratum (NAS) signalling connection establishment;
Figure 7 shows an uplink direct transfer;
Figure 8 shows s downlink direct transfer;
Figure 9 shows an example of an SCTP handler; and
Figure 10 shows a typical cellular communications network.

### Detailed Description of Preferred Embodiments of the Present Invention

Before describing embodiments of the present invention, some of the rationale for IP based RANs will now be described. Some mobile operators require a UTRAN transport solution for IP as an alternative to ATM. This is partly due to the following reasons:
1. IP is developing to allow the support of a mix of traffic types and to support low speed links.
2. The popularity of the Internet/World Wide Web and corporate LANs puts price pressure on IP networking equipment.
3. IP is the technology to the "desktop" (terminals) so most applications will be based on IP.
4. Operation and maintenance networks will be based on IP. To have networks with homogeneous technology can save management and operations costs.
5. IP, like ATM, is a packet-switched technology and provides the opportunity to use transport resources in an efficient manner.
6. Autoconfiguration capabilities.
7. Dynamic update of routing tables.

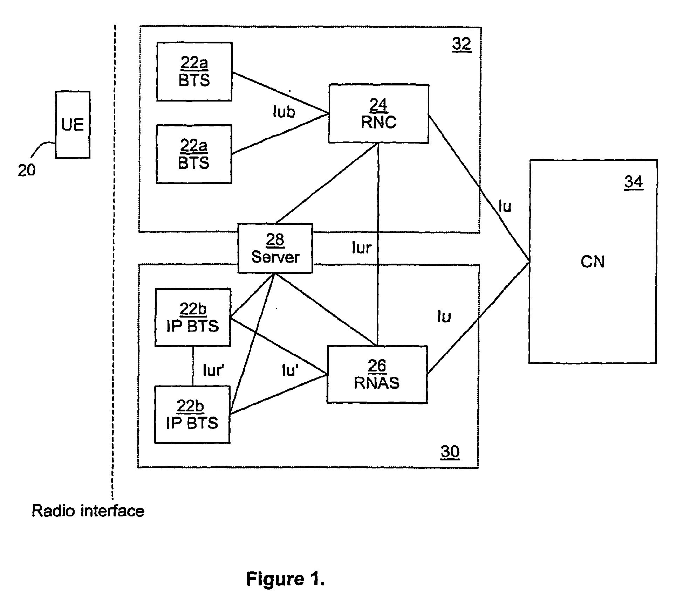

Reference is first made to Figure 1 which shows an embodiment of the present invention including an example of IP RAN logical structure. IP base transceiver stations 22 are shown. The user equipment 20 is arranged to communicate with the base transceiver station 22 via a wireless connection. The user equipment may be a mobile telephone, computer, personal digital assistant or any other such entity. The base stations may be conventional base stations 22a or may be IP base stations 22b supporting IP transport. The conventional base stations are connected to a controller which is in the illustrated embodiment a RNC 24. The RNC 24 is connected to the base stations 22a via an lub interface.

The IP base stations 22b are connected to an IP controller which is referred to as a RNAS 26 (radio network access server). This may provide some similar functions to the RNC and may also be referred to as IP based RNC. The RNAS 26 is connected to the base stations via an lu' interface. The RNC 24 and the RNAS 26 may communicate with each other via an lur interface. Also one or more servers 28 may be provided which are arranged to be able to communicate with the RNC 24, the RNAS 26 and the IP base stations 22b or only to some of them. Examples of these servers are Serving Mobile Location Center (SMLC), Common Resource Manager Server (CRMS) and Operation and Maintenance Server (OMS).

The IP base stations 22b and the RNAS 26 constitute an IP RAN 30. The base stations 22a and the RNC 24 constitute a more conventional RAN 32. Both the RNC 24 and the RNAS 26 are arranged to communicate with a core network 34 via an lu interface.

It should be appreciated that Figure 1 is a schematic view of a network. The more conventional RAN 32 may be omitted from embodiments of the present invention. In some embodiments of the present invention, a separate RNC element may be provided between the base station and the RNAS in the IP RAN. The RNAS could be replaced by an IP based RNC. The IP BTS is a base station which supports IP and some functions of the RNC. This is because in an all IP network it is not necessary to have RNCs as such.

Also provided, but not shown are user plane gateways for packet switched (RNGW) and circuit switched (CSGW) traffic. These are arranged between the RANs and/or the core network or other networks. Thus the control plane goes through RNAS which looks like a normal RNC towards other network elements in the core network such as a serving GPRS (general packet radio service) support node SGSN or other radio access network elements such as radio network controller or base station controller. The user plane goes then through these user plane gateways RNGW and CSGW. Additional elements may also be incorporated in the shown arrangement in alternative embodiments of the present invention.

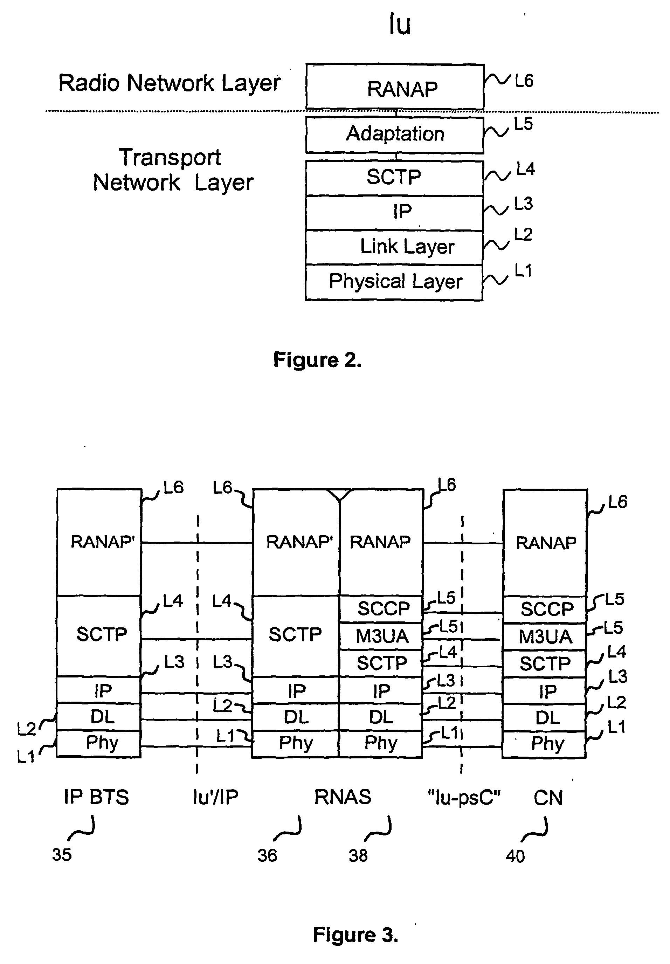

Reference is made to Figure 2 which shows a known control plane protocol stack for lu interface currently proposed in the 3GPP standardization. This is disclosed in the third generation partnership project 3GPP, Technical specification group TSG ; IP transport in UTRAN work task technical report TR25.933 (version 1.5). The protocol stack has six layers. The first layer is the physical layer L1. On top of the physical layer L1 is the link layer L2. On top of that is the IP layer L3.

On top of the IP layer is the SCTP layer, L4. As mentioned previously, this is based on the IETF protocol RFC2960. This layer is used to transport PSTN signalling messages but can also be used for a common protocol for IP RAN control plane interfaces. SCTP is a transport protocol operating on top of a connectionless packet network such as IP. It allows the sequence delivery of user messages within multiple streams with the option of order of arrival delivery of individual user messages. SCTP is connection oriented in nature. SCTP provides the means for each SCTP endpoint to provide the other endpoint during association start up with a list of transport addresses such as multiple IP addresses in combination with a SCTP port, through which that endpoint can be reached and from which it will originate SCTP packets. The association spans transfers over all of the possible source/destination combinations which may be generated from each endpoint.

On top of the SCTP layer is an adaptation layer L5. The adaptation layer is as already mentioned the SCCP user adaptation layer (SUA) or similar. Layers L1 to L5 constitute the transport layer. The radio network layer is the RANAP layer L6. Similar kind of protocol stacks can be used in other interfaces also by changing the Layer above transport layer (XXXAP). In lur interface the radio network layer is a RNSAP layer. RNSAP is a radio network subsystem signalling protocol for the lur interface. The control plane protocol stack shown in Figure 2 is used in the lu interface between RNC and the Core network. In embodiments of the invention, the adaptation layer can be omitted.

Reference is made to Figure 3 which shows the control plane protocol stack in preferred embodiments of the present invention for an IP BTS (having RNC functionality), a RNAS and a core network. The IP BTS control stack 35 has layers L1-4 and L6 as does the control stack 36 of the RNAS which communicates with the IP BTS. There is no adaptation layer L5. The control stack 38 of the RNAS which communicates with the corresponding control stack 40 of the core network have all the layers of the arrangement of Figure 2, that is layers L1-L6. In other words there is an adaptation layer L5 made up of an SCCP and M3UA sublayers (which in practice may be regarded as being separate layers in their own right). The control stack 40 of the core network has the same structure as the corresponding control stack of the RNAS.

In preferred embodiments of the present invention, the adaptation layer is omitted in the communicating control stacks of the IP BTS and the RNAS. However it should be appreciated that embodiments of the present invention can be applied elsewhere. SCTP may be used in the control plane between these other network elements as well or alternatively. Where this occurs, embodiments of the invention may be used. Only the protocol on top of the SCTP changes. In embodiments of the present invention, SCTP can be used in different interfaces of IP based RAN. For example, it can be used between two base stations, between a base station and a controller (either RNC or RNAS). Embodiments of the invention can be used also between controllers (RNCs or RNASes). Furthermore embodiments of the invention can be used between different types of server entities such as serving mobile location centres SMLC or common resource manager servers CRMS and IP base stations or RNCs/RNASes. Embodiments of the present invention can be used between an IP BTS and a UTRAN RNC. Embodiments of the present invention may even be used for communication within a single peer.

As mentioned above, different application parts with different protocols, that is the layer above the transport layer can be used in different interfaces. In lu there is RANAP and in lur there is RNSAP and so on. Embodiments of the invention could be used also in the lu interface (lu-psC in figure 3) although the figure presents the layers that are currently proposed for lu interface.

Embodiments of the present invention are arranged to avoid the need for the adaptation layer, L5, at least for peer to peer communications or connections within the IP domain. This can also be used to mean any connection between two elements within two elements in the IP domain. In this way, the control stacks can be simplified and the need to have two overlapping addressing and routing mechanisms can be avoided.

The RANAP layer does not contain sufficient addressing information in the application level messages and thus, accurate addressing has to be done below the application protocol layer, that is below layer L6 of figure 2. In preferred embodiments of the present invention, the additional addressing will effectively identify the ultimate destination of the data, message, information or the like. Usually, this information will identify a user connected to a base station or access node via a wireless interface. However, it should be appreciated that more than one user may be identified. For example, the additional information may identify a cell or number of cells and be directed to the users of that cell. The user or users may alternatively or additionally be users connected to the network via a wired connection. The additional addressing information may even identify another element in the network such as another base station, server or any other element, an element in a different network or even a different network. The additional addressing information will identify a non IP entity or an IP entity. Alternatively the addressing information may also identify one or more applications rather than an address per se. Alternatively or additionally the information may identity a connection identity or signalling flow. The additional information used to identify an entity, application, signalling flow, connection or the like are all types of connection identity information.

In embodiments of the present invention, the additional addressing is provided as follows:

The SCTP has a payload protocol identifier PPI field which is 32 bits wide. In one embodiment of the present invention, the PPI field is used in addition to other addressing elements which are normally included in the IP packet that carries the SCTP payload data. Using these extra bits, the signalling connection can be addressed with the accuracy of a user or some network service without the need for additional mechanisms at an upper layer. In a second embodiment, the identity information is put in front of the SCTP header or at some other suitable location within the header. This information can then be used in the same way as will be discussed in relation to the PPI field.

In a third arrangement, an extension header is used which includes the required additional information in between the SCTP header and the payload data.

It should be appreciated that these are just examples where the additional information can be included in the currently proposed SCTP packet. The additional information can be included at any other suitable location within the packet.

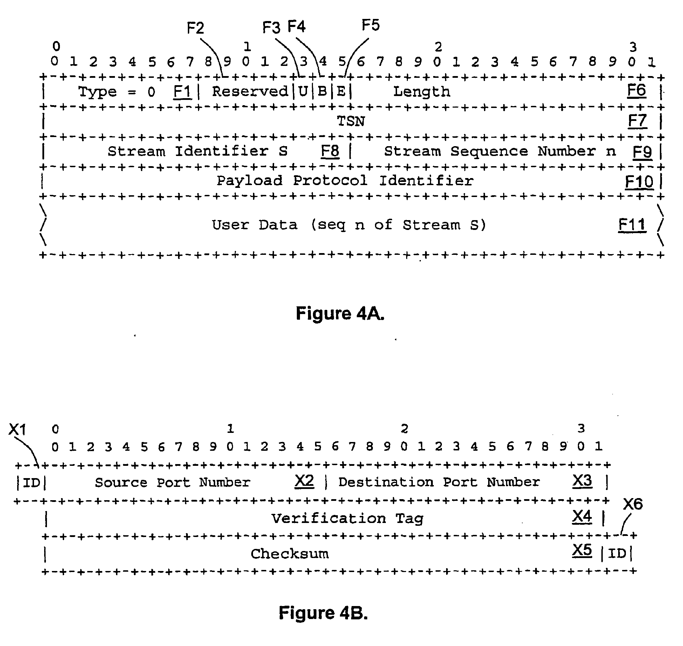

Reference is now made to Figure 4 which shows the currently proposed structure for the SCTP payload data.

The SCTP packet is composed of a common header and chunk. The chunk contains either control information or user data. N chunks may be contained in the same packet. Figure 4a shows one chunk. The first field F1 consists of 8 bits This field indicates the type of information that is going to be in the Chunk. It thus provides information identifying the purpose of the chunk. Examples: Payload data (type=0), Initiation (1), Heartbeat request (4), Abort (6) etc... The second field F2 consists of 5 bits and this should all be set to zero and is ignored by the receiver. The third field F3 is a U bit consisting of a single bit. The U -unordered bit if set to 1 indicates that this is an unordered data chunk and that there is no stream sequence number assigned to the data chunk. This means that the receiver must ignore the stream sequence number field described later. After reassembly, if necessary, unordered data chunks must be despatched to the upper layer by the receiver without any attempt to reorder. If an unordered user message is fragmented, each fragment of the message must have its U bit set to 1.

The fourth field F4 is the B field. If this single bit is set, this indicates the first fragment of a user message.

The fifth field F5 is the E field and if set indicates the last fragment of a user message.

The sixth field F6 indicates the length of the data chunks in bytes from the beginning of the type field to the end of the user data field excluding any padding.

The seventh field F7 indicates the transmission sequence number TSN. This value represents the TSN for this data chunk.

The eighth field F8 contains the stream identifier which identifies the stream to which the data following belongs.

The ninth field F9 represents the stream sequence number of the following user data within the stream.

Field F10 is the payload protocol identifier which it is proposed in embodiments of the present invention to use for addressing purposes either exclusively or in addition to the currently proposed purpose which is to identify the payload protocol identifier. Finally, the eleventh field F11 contains the user data.

Reference is made to Figure 4B which shows the SCTP common header format. The first field X1 is a new field proposed by the second embodiment of the present invention. This ID field is used in the same way as the payload protocol identifier field F10 already described. The second field X2 is the source port number and is the SCTP sender's port number. This can be used by the receiver in combination with a source IP address, the SCTP destination port and possibly the destination IP address to identify the association to which the packet belongs.

The third field X3 is the SCTP port number for which the packet is to be delivered. The receiving port will use this port number to demultiplex the SCTP packet to the correct receiving end point/application.

The fourth field X4 is the verification tag field. The verification tag is used by the receiver to validate the sender of the SCTP packet.

The fifth field X5 is the check sum field.

The sixth field X6 is provided in the third embodiment of the present invention instead of the first field X1. Thus, in the second embodiment of the present invention, fields X1 to X5 are provided whilst in the third embodiment of the present invention, fields X2 to X6 are used. In the first embodiment of the invention fields X2 to X5 would be provided.

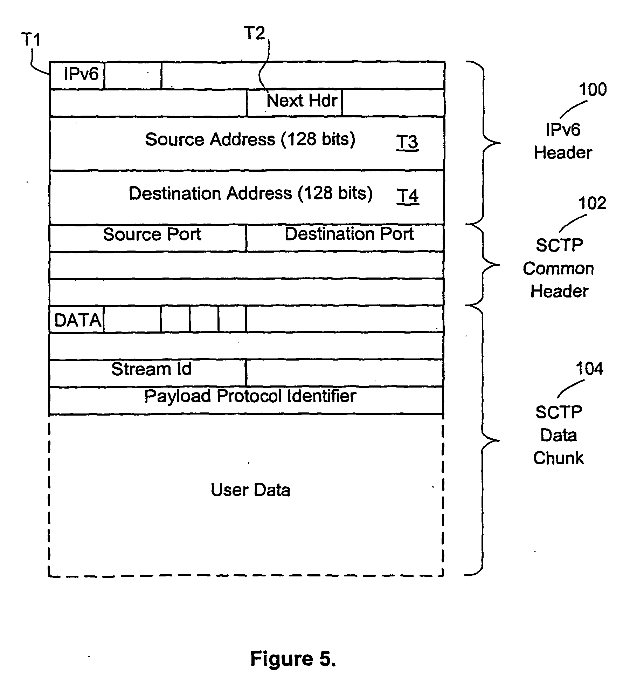

Reference is now made to Figure 5 which shows the addressing elements in the IP packet that carries the SCTP payload data. This packet can be divided into three sections. The first section 100 is the IPv6 header 100. The IPv6 header addresses the peers and contains the addresses of the source and destination peers. The second section 102 is the SCTP common header as shown in Figure 4B. The common headers address the SCTP association between the peers. There can be several SCTP associations between the same two peers so unique source and destination ports are used to distinguish between the connection. SCTP provides multiple channels in one pipe. The third section is the SCTP data chunk 104 as shown in Figure 4A. Some of the elements of the common header and data chunk are shown in Figure 5 and others of those fields have been omitted for clarity. The data packets can be sent via the SCTP association using a stream. There may be negotiation by applications in the peers as to which stream is used. The stream id identifies the stream used.

The IPv6 header includes various fields. The important fields are as follows:

Field T1 indicates that the internet protocol version 6 (IPv6) is being used. As will be apparent, this field may refer to other versions of the internet protocol. The next field of relevance is field T2 which is next header. The Next Header field of IPv6 header identifies the type of header immediately following the IPv6 header. The next field of interest is the source address field T3 which includes the IP address of the source. Finally, the destination address field T4 includes the destination address of the packet.

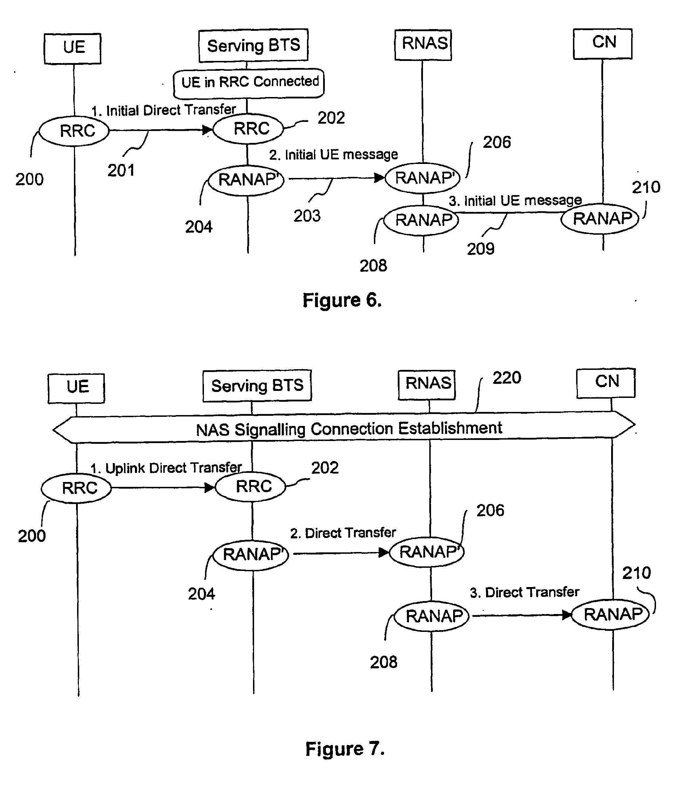

The payload protocol identifier is used in embodiments of the present invention to address for example mobile users in the IP RAN signalling connections instead of or as well as using this field to indicate the type of information being carried, as is currently proposed. For example, the application for addressing a mobile user with the PPI field in the SCTP data chunk in the case of a non-access stratum NAS signalling connection between the user equipment and the core network will now be described with reference to Figure 6 to Figure 8. The lu signalling connection identity for the user equipment is allocated by the base transceiver station or by the core network during the NAS signalling connection procedure depending on which entity activates the connection. For example, the RANAP message "initial user equipment message" contains the "lu signalling connection identity" for the user equipment that is assigned by the base transceiver station when the user equipment has initiated the NAS connection establishment. In the case of the IP RAN architecture, the base transceiver station, the RNAS and the core network are required to store and remember the lu signalling connection identifiers for the duration of the lu connection. This is shown in Figure 6.

In Figure 6, the radio resource control layer 200 of the user equipment makes a direct connection 201 to the radio resource control (RRC) layer 202 of the serving base transceiver station. The signalling 201 between the user equipment and the base transceiver station is arranged to establish a connection. With signalling 203, a connection is made between the RANAP' layer 204 of the serving base transceiver station and the RANAP' layer 206 of the RNAS. This message contains the lu signalling connection identity for the user equipment. The initial user equipment message is sent via the RANAP layer 208 to the RANAP 210 layer of the core network.

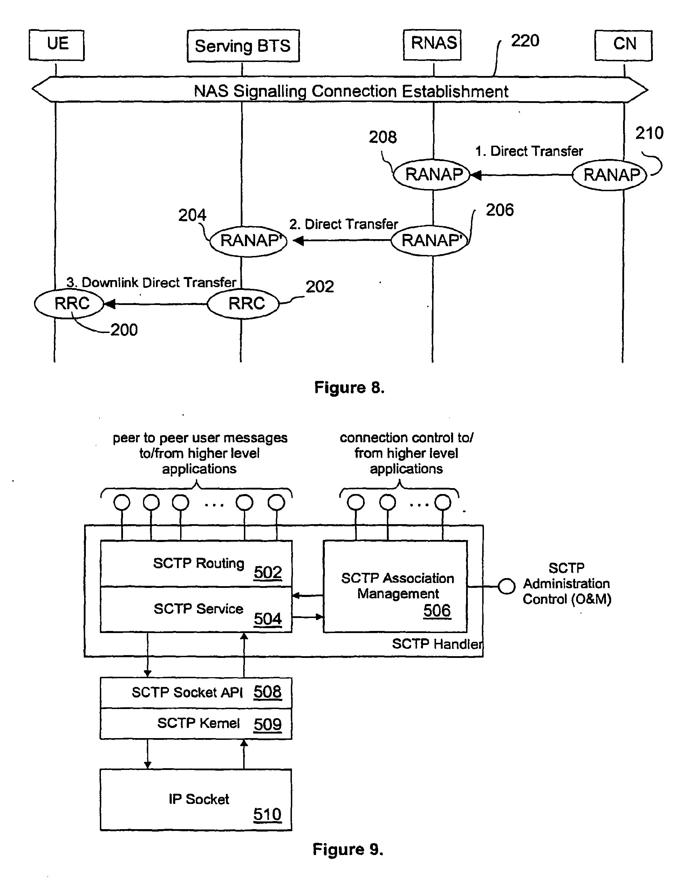

After the NAS signalling connection establishment, the RANAP direct transfer messages as illustrated in Figures 7 and 8 do not contain the lu signalling connection ID. This means that the base transceiver station and RNAS must initiate communication instances for the lu signalling connection with the UE that is mapped to the SCTP association between the peers (that the is the base transceiver station and RNAS), the SCTP stream and the lu signalling connection ID. The SCTP stream selection can be based on a known algorithm in peers.

With reference to Figure 7, the RRC 200 of the user equipment makes an uplink direct transfer to the RRC 202 of the serving base transceiver station. The RANAP layer 204 makes a direct transfer to the RANAP layer 206 of the RNAS. The RANAP layer 208 makes a direct transfer to the RANAP layer 210 of the core network. An NAS signalling connection is established between the user equipment, serving BTS, RNAS and CN.

Figure 8 shows the corresponding Figure for the downlink direct transfer. The RANAP 210 of the core network sends a direct transfer to the RANAP 208 of the RNAS. The RANAP layer 206 sends a direct transfer to the RANAP layer 204 of the serving base transceiver station. The RRC layer 202 of the serving BTS sends a downlink direct transfer message to the RRC of the user equipment. The NAS signalling connection establishment between the user equipment, serving BTS and RNAS and core network is shown schematically in both Figures 7 and 8 and is referenced 220.

When the communication instance for a user equipment associated with a peer wants to send an application message to its remote peer the peer (that is the base transceiver station or RNAS) sets the lu signalling connection ID in the PPI field of each SCTP data chunk that carries application protocol messages and sends the message for delivery using the SCTP association and SCTP stream that is mapped to the lu signalling connection.

The receiving peer reads the SCTP data chunk from the SCTP stream that is carried in the SCTP association, checks the lu signalling connection ID in the PPI field of the SCTP data chunk that carries application protocol messages and sends the application message to the communication instance that handles the lu signalling connection for the user equipment.

It should be appreciated that the way in which the PPI field of the SCTP data chunk is used for addressing will depend on the needs of the application level protocol or the network service. For example, some signalling connections may have to address a group of users, some network object such as cells and so on. Of course this can be used to address also a single user.

Reference is made to Figure 9 which illustrates how embodiments of the present invention can be implemented. Embodiments of the present invention can be used if the SCTP stack layer which supports the sockets API (application programming interface) extension for SCTP that provides a TCP style interface. The application protocols such as RANAP cannot directly use the sockets API for SCTP. Accordingly, in embodiments of the present invention, a SCTP handler application that can provide SCTP communication services to higher level applications is provided so that the high level applications do not need to understand the lower level SCTP functions.

The SCTP handler application in preferred embodiments of the present invention is a software component that has a standardised interface to the higher level applications and uses the sockets API extension SCTP to the lower SCTP pack. The SCTP handler is preferably but not necessarily an integral part of the SCTP pack. The SCTP handler is required between the upper layer application and the SCTP as the standard SCTP stack does not check the SCTP header information in the data chunk, that is all the received packets from one SCTP association come to the same endpoint in a peer.

The SCTP handler is arranged to provide the following:
1. Peer to Peer transfer for application protocol messages by using the multistreaming function that SCTP provides.
2. Abstract interface to the higher level applications that hide lower level SCTP issues.
3. Management of SCTP associations between signalling end points.
4. Asynchronous reporting of status change to higher level applications.
5. Full support for handling SCTP header information in order to deliver transparent data to remote peers in the payload protocol identifier field in each user message and to support multistreaming.
6. Support for configuring and reading various SCTP parameters from the higher level application level.

The SCTP handler should maintain the relevant structures that are a subset from the SCTP management information base (SCTPMIB). This data is required for setting up the initial SCTP association parameters and managing each SCTP association.

In Figure 9, the SCTP handler 500 can be represented by three blocks: SCTP routing 502, SCTP service 504 and SCTP association management 506. As mentioned previously, the SCTP handler may in practice be provided by software so the blocks illustrated in Figure 9 are there to illustrate the concept of embodiments of the present invention. The SCTP routing block 502 is used for peer to peer user messages to and from higher level applications. Typically, the routing block 502 will be connected to the XXXAP layer like RANAP. The routing block forwards the received SCTP data chunks to the upper level applications based on the stream ID and additionally addressing information provided by embodiments of the present invention. The routing block also adds the stream ID and the additional addressing information to the data chunks that are to be sent by the upper layer application to its peer. The upper level application may set up the peer to peer connection using the methods that the SCTP handler's connection control interface provides. After that the upper level application gets a peer to peer user message instance in the SCTP handler. The user data packets can go now via the SCTP routing function.

The SCTP association management block 506 is also connected to the RANAP layer and provides connection control to/from the higher level applications which in the described embodiment are the RANAP. The SCTP association management block 506 also has a connection to the SCTP service block 504. The management block 506 uses the SCTP service block 504 to set up the SCTP associations and receiving status information from the SCTP associations (other than the data packets).

The SCTP service block is connected to receive signals from said signals to the SCTP socket API 508. The service block 504 has the function of being the peer endpoint that sends/receives SCTP packets to and from different SCTP associations. The SCTP kernel 509 is connected to receive signals to and from the IP socket 510. The purpose of sockets is to allow existing applications built on connection or protocols to be ported to use SCTP with little effort. The kernel thus provides the core SCTP functions. The Kernel is the STCP stack in accordance with IETF standard number RF2960. The socket allows for communication between the core 509 and the handler 500 and is part of the standard IP layer.

The SCTP Handler can be implemented in every node, where embodiments of the invention is used. Examples of these nodes in radio access networks are IP BTS, RNAS, SMLC, CRMS, OMS, CSGW, RNGW and RNC. Embodiments of the invention are not however limited to these elements. Embodiments of the present invention may as well be utilized in core network elements or in an All IP network.

Embodiments of the present invention thus simplify those communications which can be simplified where the connections are all in the IP domain. Embodiments of the present invention have been described as using SCTP protocols. It should be appreciated that embodiments of the present invention may use other protocols.

## Claims

1. An internet protocol based system comprising a plurality of entities, at least two of said entities being arranged to use SCTP for signalling therebetween, said SCTP signalling comprising a source port number (X2), a destination port number (X3), and data;
**characterized by**:
said SCTP signalling comprising connection identity information relating to a connection between at least two of said entities, said connection identity information identifying the ultimate destination of said data.

2. A system as claimed in claim 1, wherein said connection identity information comprises address information.

3. A system as claimed in claim 2, wherein said address information identifies at least one other further entity.

4. A system as claimed in claim 1 or 2, wherein said connection identity information comprises information identifying an application.

5. A system as claimed in claim 1, wherein said connection identity information identifies a connection flow.

6. A system as claimed in any preceding claim, wherein said connection identity information is provided in an SCTP packet (102,104).

7. A system as claimed in claim 6, wherein said connection identity information is provided in the data chunk (104) part of the SCTP packet (102,104).

8. A system as claimed in claim 7, wherein said connection identity information is provided in a payload protocol identifier field (F10).

9. A system as claimed in claim 7, wherein said connection identity information is provided in a field between a stream sequence number field (F9) and user data (F11).

10. A system as claimed in claim 6, wherein said connection identity information is provided in a header for the SCTP packet (102).

11. A system as claimed in any of claims 6 to 10, wherein said address information is provided in a separate field in said SCTP packet (102, 104).

12. A system as claimed in any preceding claim, wherein at least one of the two entities is arranged to provide further address information relating to at least one of said two entities.

13. A system as claimed in any of the preceding claims, wherein at least one of said two entities comprises means for sending and/or receiving SCTP packets to and/or from the other of said two entities.

14. A system as claimed in any preceding claim, wherein at least one of said two entities comprises means for setting up SCTP associations.

15. A system as claimed in any preceding claim, wherein at least one of said two entities comprises means for receiving status information relating to SCTP associations.

16. A system as claimed in any preceding claim, wherein at least one of said two entities comprises means for forwarding SCTP packets to a radio network layer in dependence on said connection identity information.

17. A system as claimed in any preceding claim, wherein at least one of said two entities comprises means for adding said connection identity information to a SCTP packet.

18. A system as claimed in any preceding claim, wherein said further entity comprises at least one of the following:
- user terminal,
- network, or part of network,
- server, or
- cell or base transceiver station.

19. A system as claimed in any preceding claim wherein one of said entities is one of the following:
base station; controller; radio network controller; core network; radio network access server; gateway or server and the other of said entities is one of the following:
base station; controller; radio network controller; core network; radio network access server; gateway or server

20. A method for use in an internet protocol based system comprising a plurality of entities, comprising the steps of:
sending SCTP transport signalling information between two of said entities, said SCTP signalling information comprising a source port number, a destination port number, and data;
**characterized by**:
said SCTP signalling information comprising connection identity information relating to a connection between at least two of said entities, said connection identity information identifying the ultimate destination of said data

21. Apparatus for use in a internet protocol based system, said apparatus comprising means for sending to another entity an SCTP transport packet, said apparatus being arranged to include in said packet a source port number, a destination port number, and data;
**characterized by**:
said apparatus being arranged to include in said packet connection identity information relating to a connection between said apparatus and at least one further entity, said connection identity information identifying the ultimate destination of said data.

## Patentansprüche

1. Internet-Protokoll-basiertes System mit einer Vielzahl von Instanzen, wobei zumindest zwei der Instanzen eingerichtet sind zum Verwenden von SCTP für eine Signalisierung zwischen ihnen, wobei die SCTP-Signalisierung eine Quellportnummer (X2), eine Zielportnummer (X3) und Daten aufweist,
**dadurch gekennzeichnet, dass**
die SCTP-Signalisierung Verbindungskennungsinformationen in Bezug auf eine Verbindung zwischen zumindest zwei der Instanzen aufweist, wobei die Verbindungskennungsinformationen das endgültige Ziel der Daten identifizieren.

2. System gemäß Anspruch 1, wobei die Verbindungskennungsinformationen Adressinformationen aufweisen.

3. System gemäß Anspruch 2, wobei die Adressinformationen zumindest eine andere weitere Instanz identifizieren.

4. System gemäß Anspruch 1 oder 2, wobei die Verbindungskennungsinformationen Informationen aufweisen, die eine Anwendung identifizieren.

5. System gemäß Anspruch 1, wobei die Verbindungskennungsinformationen einen Verbindungsfluss identifizieren.

6. System gemäß einem der vorhergehenden Ansprüche, wobei die Verbindungskennungsinformationen in einem SCTP-Paket (102, 104) bereitgestellt werden.

7. System gemäß Anspruch 6, wobei die Verbindungskennungsinformationen in dem Datenstück- (104) Teil von dem SCTP-Paket (102, 104) bereitgestellt werden.

8. System gemäß Anspruch 7, wobei die Verbindungskennungsinformationen in einem Nutzlastprotokollbezeichnerfeld (F10) bereitgestellt werden.

9. System gemäß Anspruch 7, wobei die Verbindungskennungsinformationen in einem Feld zwischen einem Stromsequenznummerfeld (F9) und Benutzerdaten (F11) bereitgestellt werden.

10. System gemäß Anspruch 6, wobei die Verbindungskennungsinformationen in einem Kopffeld für das SCTP-Paket (102) bereitgestellt werden.

11. System gemäß einem der Ansprüche 6 bis 10, wobei die Adressinformationen in einem separaten Feld in dem SCTP-Paket (102, 104) bereitgestellt werden.

12. System gemäß einem der vorhergehenden Ansprüche, wobei zumindest eine der zwei Instanzen eingerichtet ist zum Bereitstellen von weiteren Adressinformationen in Bezug auf zumindest eine der zwei Instanzen.

13. System gemäß einem der vorhergehenden Ansprüche, wobei zumindest eine der zwei Instanzen eine Einrichtung zum Senden und/oder Empfangen von SCTP-Paketen zu und/oder von der anderen der zwei Instanzen aufweist.

14. System gemäß einem der vorhergehenden Ansprüche, wobei zumindest eine der zwei Instanzen eine Einrichtung zum Aufbauen von SCTP-Assoziierungen aufweist.

15. System gemäß einem der vorhergehenden Ansprüche, wobei zumindest eine der zwei Instanzen eine Einrichtung zum Empfangen von Statusinformationen in Bezug auf SCTP-Assoziierungen aufweist.

16. System gemäß einem der vorhergehenden Ansprüche, wobei zumindest eine der zwei Instanzen eine Einrichtung zum Weiterleiten von SCTP-Paketen an eine Funknetzwerkschicht in Abhängigkeit von den Verbindungskennungsinformationen aufweist.

17. System gemäß einem der vorhergehenden Ansprüche, wobei zumindest eine der zwei Instanzen eine Einrichtung zum Hinzufügen der Verbindungskennungsinformationen zu einem SCTP-Paket aufweist.

18. System gemäß einem der vorhergehenden Ansprüche, wobei die weitere Instanz zumindest eines der folgenden aufweist:
- Benutzerendgerät,
- Netzwerk oder Netzwerkteil,
- Server, oder
- Zelle oder Funkbasisstation.

19. System gemäß einem der vorhergehenden Ansprüche, wobei eine der Instanzen eines der folgenden ist:
Basisstation; Steuerung; Funknetzwerksteuerung; Kernnetzwerk; Funknetzwerkzugangsserver; Gateway oder Server,
und die andere der Instanzen eines der folgenden ist:
Basisstation; Steuerung; Funknetzwerksteuerung; Kernnetzwerk; Funknetzwerkzugangsserver; Gateway oder Server.

20. Verfahren zur Verwendung in einem Internet-Protokollbasierten System mit einer Vielzahl von Instanzen, mit den Schritten:
Senden von SCTP-Transport-Signalisierungsinformationen zwischen zwei der Instanzen, wobei die SCTP-Signalisierungsinformationen eine Quellportnummer, eine Zielportnummer und Daten aufweisen;
**dadurch gekennzeichnet, dass**
die SCTP-Signalisierungsinformationen Verbindungskennungsinformationen in Bezug auf eine Verbindung zwischen zumindest zwei der Instanzen aufweisen, wobei die Verbindungskennungsinformationen das endgültige Ziel der Daten identifizieren.

21. Vorrichtung zur Verwendung in einem Internet-Protokoll-basierten System, wobei die Vorrichtung eine Einrichtung zum Senden eines SCTP-Transport-Pakets an eine andere Instanz aufweist, wobei die Vorrichtung eingerichtet ist zum Einbinden von einer Quellportnummer, einer Zielportnummer und Daten in das Paket,
**dadurch gekennzeichnet, dass**
die Vorrichtung eingerichtet ist zum Einbinden von Verbindungskennungsinformationen in Bezug auf eine Verbindung zwischen der Vorrichtung und zumindest einer weiteren Instanz in das Paket, wobei die Verbindungskennungsinformationen das endgültige Ziel der Daten identifizieren.

## Revendications

1. Système basé sur un protocole Internet comprenant une pluralité d'entités, au moins deux desdites entités étant agencées pour utiliser SCTP pour la signalisation entre elles deux, ladite signalisation SCTP comprenant un numéro de port source (X2), un numéro de port de destination (X3), et une donnée ;
**caractérisé par** :
ladite signalisation SCTP comprenant une information d'identité de connexion relative à une connexion entre au moins deux desdites entités, ladite information d'identité de connexion identifiant la destination finale de ladite donnée.

2. Système selon la revendication 1, dans lequel ladite information d'identité de connexion comprend une information d'adresse.

3. Système selon la revendication 2, dans lequel ladite information d'adresse identifie au moins une autre entité supplémentaire.

4. Système selon la revendication 1 ou 2, dans lequel ladite information d'identité de connexion comprend une information identifiant une application.

5. Système selon la revendication 1, dans lequel ladite information d'identité de connexion identifie un flux de connexion.

6. Système selon l'une quelconque des revendications précédentes, dans lequel ladite information d'identité de connexion est prévue dans un paquet SCTP (102, 104).

7. Système selon la revendication 6, dans lequel ladite information d'identité de connexion comprend est prévue dans la partie de bloc données (104) du paquet SCTP (102, 104).

8. Système selon la revendication 7, dans lequel ladite information d'identité de connexion est prévue dans un champ d'identification de protocole de charge utile (F10).

9. Système selon la revendication 7, dans lequel ladite information d'identité de connexion est prévue dans un champ entre un champ de numéro de séquence de flux (F9) et une donnée utilisateur (F11).

10. Système selon la revendication 6, dans lequel ladite information d'identité de connexion est prévue dans un en-tête pour le paquet SCTP (102).

11. Système selon l'une quelconque des revendications 6 à 10, dans lequel ladite information d'adresse est prévue dans un champ séparé dans ledit paquet SCTP (102, 104).

12. Système selon l'une quelconque des revendications précédentes, dans lequel au moins l'une des deux entités est agencée pour fournir une information d'adresse supplémentaire relative à au moins l'une desdites deux entités.

13. Système selon l'une quelconque des revendications précédentes, dans lequel au moins l'une desdites deux entités comprend un moyen pour envoyer et/ou recevoir des paquets SCTP à et/ou de l'autre desdites deux entités.

14. Système selon l'une quelconque des revendications précédentes, dans lequel au moins l'une desdites deux entités comprend un moyen pour établir des associations SCTP.

15. Système selon l'une quelconque des revendications précédentes, dans lequel au moins l'une desdites deux entités comprend un moyen pour recevoir une information de statut relative à des associations SCTP.

16. Système selon l'une quelconque des revendications précédentes, dans lequel au moins l'une desdites deux entités comprend un moyen pour transférer des paquets SCTP à une couche de réseau radio de manière dépendante à ladite information d'identité de connexion.

17. Système selon l'une quelconque des revendications précédentes, dans lequel au moins l'une desdites deux entités comprend un moyen pour ajouter ladite information d'identité de connexion à un paquet SCTP.

18. Système selon l'une quelconque des revendications précédentes, dans lequel ladite entité supplémentaire comprend au moins l'un des éléments suivants :
terminal utilisateur,
réseau, ou partie de réseau,
serveur, ou
cellule ou station émettrice-réceptrice de base.

19. Système selon l'une quelconque des revendications précédentes, dans lequel l'une desdites entités est l'un des éléments suivants :
station de base ; contrôleur, contrôleur réseau radio ; réseau d'infrastructure ; serveur d'accès de réseau radio ; passerelle ou serveur
et l'autre desdites entités est l'un des éléments suivants ;
station de base ; contrôleur, contrôleur réseau radio ; réseau d'infrastructure ; serveur d'accès de réseau radio ; passerelle ou serveur

20. Procédé à utiliser dans un système basé sur un protocole Internet comprenant une pluralité d'entités, comprenant les étapes consistant à :
envoyer une information de signalisation de transport SCTP entre deux desdites entités, ladite information de signalisation SCTP comprenant un numéro de port source, un numéro de port de destination, et une donnée ;
**caractérisé par** :
ladite information de signalisation SCTP comprenant une information d'identité de connexion relative à une connexion entre au moins deux desdites entités, ladite information d'identité de connexion identifiant la destination finale de ladite donnée.

21. Dispositif à utiliser dans un système basé sur un protocole Internet, ledit dispositif comprenant un moyen pour envoyer à une autre entité un paquet de transport SCTP, ledit dispositif étant agencé pour inclure dans ledit paquet un numéro de port source, un numéro de port de destination, et une donnée;
**caractérisé par**:
ledit dispositif étant agencé pour inclure dans ladite information d'identité de connexion de paquet relative à une connexion entre ledit dispositif et au moins une entité supplémentaire, ladite information d'identité de connexion identifiant la destination finale de ladite donnée.
